Europäisches Patentamt

European Patent Office

Office européen des brevets

(19)

(11) Veröffentlichungsnummer: **0 209 086**
**B1**

(12) **EUROPÄISCHE PATENTSCHRIFT**

(45) Veröffentlichungstag der Patentschrift:
27.09.89

(21) Anmeldenummer: 86109487.8

(22) Anmeldetag: 11.07.86

(51) Int. Cl.⁴: **F 02 M 35/02**, B 01 D 46/42,
**B 65 D 45/22**

(54) Bügelverschluss für das Filtergehäuse eines Ansaugluftfilters.

(30) Priorität: 19.07.85 DE 3525785

(43) Veröffentlichungstag der Anmeldung:
21.01.87 Patentblatt 87/4

(45) Bekanntmachung des Hinweises auf die Patenterteilung:
27.09.89 Patentblatt 89/39

(84) Benannte Vertragsstaaten:
FR GB IT

(56) Entgegenhaltungen:
DE-A- 2 412 051
DE-A- 3 118 413
FR-A- 2 507 707
GB-A- 2 108 190

(73) Patentinhaber: KNECHT Filterwerke GmbH,
Haldenstrasse 48, D-7000 Stuttgart 50 (DE)

(72) Erfinder: Weller, Günter, Brigachstrasse 8,
D-7000 Stuttgart 50 (DE)

(74) Vertreter: Pfusch, Volker, Dipl.-Ing., MAHLE GMBH
Patentabteilung Pragstrasse 26-46 Postfach 50 07 69,
D-7000 Stuttgart 50 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Bügelverschluß für das Filtergehäuse eines Ansaugluftfilters insbesondere von Verbrennungsmotoren nach dem Oberbegriff des Anspruches 1.

Derartige Bügelverschlüsse sind aus der DE-A-2 412 051 bekannt. Seine Federklemmen dienen bei einem Luftfiltergehäuse zur Verbindung des Gehäusedeckels mit dem Gehäuseunterteil, wobei sie über den Umfang mit Abstand voneinander rings um das Gehäuse verteilt mit ihren unteren Enden schwenkbar in Ansätzen am Gehäuseunterteil festgehalten werden, während ihre oberen Enden über Rippen am Deckel greifen.

Der Nachteil bei einer derartigen Anordnung besteht darin, daß beim Zusammenbau der beiden Filtergehäuseteile die Federklemmen in einem ersten Arbeitsgang von Hand oder mit einer speziellen Vorrichtung in die am Gehäuseunterteil angebrachten Ansätze eingezogen und in einem zweiten Arbeitsgang ebenfalls von Hand oder mit einer weiteren speziellen Vorrichtung verschlossen werden müssen.

Der Erfindung liegt daher die Aufgabe zugrunde, bei der Montage des Filtergehäuses, das Einführen der Federklemme in das Widerlager vollautomatisch durchführen zu können.

Gelöst wird diese Aufgabe durch einen Bügelverschluß nach den kennzeichnenden Merkmalen des Anspruchs 1.

Vorteilhafte Ausgestaltungen der Erfindung sind in den Unteransprüchen enthalten.

Ein Ausführungsbeispiel der Erfindung wird nachstehend anhand der Zeichnung näher erläutert. Es zeigt:

Fig. 1 einen Ausschnitt eines Ansaugluftfilters mit einem erfindungsgemäßen Widerlager und einer Federklemme in Seitenansicht z.T. im Schnitt

Fig. 2 einen Schnitt nach der Linie II-II in Fig. 1

Fig. 3 Fig. 1 mit einer schematisch angedeuteten Montagevorrichtung.

Ein Ansaugluftfilter eines Verbrennungsmotors besitzt ein Filtergehäuse, das aus einem Gehäuseunterteil 1 und einem einen Vorsprung 2 aufweisenden Gehäusedeckel 3 besteht. Die Verbindung der beiden Filtergehäuseteile 1, 3 erfolgt mittels einer Federklemme 4 und einem am Gehäuseunterteil 1 angeformten Widerlager 5. Die Federklemme 4 aus bandförmigem Federstahl ist an ihrem dem Gehäuseunterteil zugewandten Ende 6 etwa kreisförmig gebogen, um eine Lagerfläche für das Widerlager 5 zu bilden.

Das gegenüberliegende Ende 7 der Federklemme 4 ist in etwa S-förmig gebogen, um einerseits ein Griffstück 8 und andererseits eine Anlagefläche 9 zum Übergreifen des Vorsprungs 2 am Gehäusedeckel 3 zu bilden.

Das am Kunststoff-Gehäuseunterteil 1 einstückig angeformte Widerlager 5 besteht aus einer nach unten offenen Zylindrischen Lagerhalbschale 10, die zur Aufnahme des etwa kreisförmig gebogenen Endes 6 der Federklemme 4 entsprechend ausgebildet ist, und zwei jeweils seitlich darunter mit Abstand angeordneten, einander gegenüberliegenden federnden Klinken 11, 12. Die an dem Gehäuseunterteil 1 angespritzten federnden Klinken 11, 12 weisen an ihren der Lagerhalbschale 10 abgewandten Enden Abschrägungen 13 auf, um die Federklemme 4 leichter einführen zu können. Die entgegengesetzt liegenden der Lagerhalbschale zugewandten Enden 14, 15 der federnden Klinken 11, 12 sind in ihrer Ruhelage nach innen geneigt, so daß sie bei eingeführter Federklemme 4 an dem kreisförmig gebogenen Ende 6 der Federklemme 4 innen angreifen und somit ein Herausfallen der Federklemme 4 aus dem Widerlager 5 verhindern.

Der Abstand 16 zwischen Lagerhalbschale 10 und den federnden Klinken 11, 12 entspricht in etwa der Wandstärke der Federklemme 4, so daß diese nach Einführung in das Widerlager leicht schwenkbar gelagert ist.

Die federnden Klinken 11, 12 sind so am Gehäuseunterteil 1 angeformt, daß ihr gegenseitiger Abstand 17 in ihrem nicht federnden Bereich nahe der Abschrägungen 13 in etwa der Breite der Federklemme 4 entspricht, so daß einerseits ein leichtes Einführen der Federklemme 4 zwischen die beiden federnden Klinken 11, 12 möglich ist und andererseits ein Herausfallen der Federklemme 4 durch Eingreifen der der Lagerhalbschale zugewandten Enden 14, 15 der federnden Klinken 11, 12 in das Innere des kreisförmig gebogenen Endes 6 der Federklemme 4 verhindert wird.

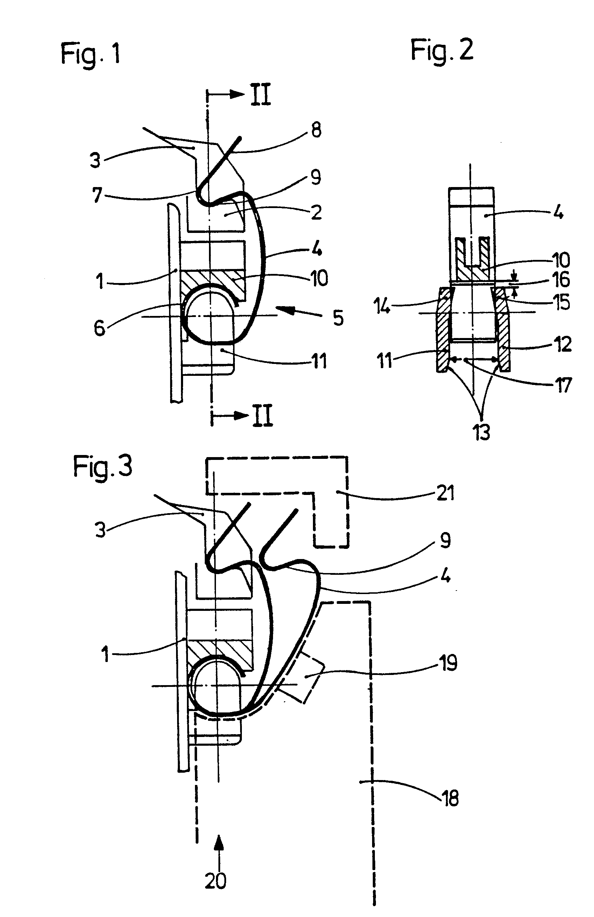

Die Einführung der Federklemme 4 in das Widerlager 5 erfolgt bei der Montage des Filtergehäuses vollautomatisch. Hierzu wird wie in Fig. 3 schematisch angedeutet eine Vorrichtung 18 verwendet, in der ein Magnet 19 befestigt ist, der zur Halterung der in die Vorrichtung 18 eingelegten Federklemme 4 dient. Die Vorrichtung 18 mit der eingelegten Federklemme 4 wird gemäß Pfeil 20 senkrecht nach oben bewegt, so daß das kreisförmig gebogene Ende 6 der Federklemme 4 zwischen den federnden Klinken 11, 12 hindurch nach oben geführt wird bis es an der mittig zwischen den federnden Klinken 11, 12 und oberhalb derselben liegenden Lagerschale 10 anliegt, wobei die Enden 14, 15 der federnden Klinken 11, 12 hinterschnittartig in das Innere des kreisförmig gebogenen Endes 6 der Federklemme 4 einschnappen.

Das Verschließen der Federklemme 4, d.h. das In-Eingriff-Bringen der Anlagefläche 9 der Federklemme 4 mit dem Vorsprung 2 des Gehäusedeckels 3, erfolgt mittels einer von oben die Federklemme 4 übergreifenden Glocke 21.

Die Vorrichtung 18 und die Glocke 21 sind so gestaltet, daß sie gleichzeitig sämtliche zur Verbindung von Gehäuseunterteil und Gehäusedeckel 3 vorgesehenen Federklemmen aufnehmen bzw. auf sie einwirken.

Eine derartig konstruktiv einfache Ausbildung eines Widerlagers für im Luftfilterbau in großer Stückzahl verwendeter Federklemmen ermöglicht eine kostengünstige, vollautomatische Montage bezüglich Federklemme und Filtergehäuse.

## Patentansprüche

1. Bügelverschluß für das Filtergehäuse eines Ansaugluftfilters von insbesondere Verbrennungsmotoren zur Verbindung des Gehäusedeckels (3) mit dem Gehäuseunterteil (1), bestehend aus einer bandförmigen Federklemme (4) und einem am Gehäuseunterteil angebrachten Widerlager (5), dadurch gekennzeichnet, daß das Widerlager (5) aus einer Lagerhalbschale (10) und zwei seitlich unterhalb der Lagerschale (10) angeordneten Klinken (11, 12) besteht, daß die Klinken (11, 12) mit einem Abstand voneinander angeordnet sind, der an den von der Lagerhalbschale (10) abgewandten Enden mindestens der Breite der Federklemme (4) entspricht, daß die der Lagerhalbschale (10) zugewandten Enden der Klinken federnd ausgebildet sind, daß die bandförmige Federklemme (4) an ihrem dem Gehäuseunterteil (1) zugewandten Ende (6) kreisförmig gebogen ist und ein Lager bildet, das an der Lagerhalbschale (10) anliegt, und daß die federnden Enden der Klinken (11, 12) in die Öffnung des kreisförmig gebogenen Endes (6) der Federklemme eingreifen.

2. Bügelverschluß nach Anspruch 1, dadurch gekennzeichnet, daß die Lagerhalbschale (10) und die zwei Klinken (11, 12) bei einem Kunststoff-Gehäuseunterteil (1) einstückig an diesem angespritzt sind.

3. Bügelverschluß nach Anspruch 1 oder 2, dadurch gekennzeichnet, daß der Abstand (16) zwischen Lagerhalbschale (10) und den zwei Klinken (11, 12) in etwa der Wandstärke der Federklemme (4) entspricht.

4. Bügelverschluß nach einem der vorhergehenden Ansprüche, dadurch gekennzeichnet, daß die von der Lagerhalbschale (10) abgewandten Enden der beiden Klinken (11, 12) auf den einander gegenüberliegenden Seiten Abschrägungen (13) aufweisen.

## Claims

1. A lever-type closure means for the filter housing of an intake air filter of, in particular, internal combustion engines for connecting the housing lid (3) to the housing base (1), consisting of a strip-form spring clip (4) and an abutment (5) arranged on the housing base, characterised in that the abutment (5) consists of a mounting half shell (10) and two catches (11, 12) arranged laterally beneath the mounting shell (10), in that the catches (11, 12) are arranged at a distance from one another corresponding, at the ends remote from the mounting half shell (10), to at least the width of the spring clip (4) in that the ends of the catches facing the mounting half shell (10) are sprung in construction, in that the strip-form spring clip (4) is curved into a circle at its end (6) facing the housing base (1) and forms a bearing which rests on the mounting half shell (10), and in that the sprung ends of the catches (11, 12) engage in the opening in the circularly curved end (6) of the spring clip.

2. A lever-type closure means according to Claim 1, characterised in that, in the case of a plastic housing base (1), the mounting half shell (10) and the two catches (11, 12) are injection moulded integrally with it.

3. A lever-type closure means according to Claim 1 or 2, characterised in that the distance (16) between mounting half shell (10) and the two catches (11, 12) corresponds roughly to the wall thickness of the spring clip (4).

4. A lever-type closure means according to one of the preceding claims, characterised in that the ends of the two catches (11, 12) remote from the mounting half shell (10) have bevels (13) on the mutually opposed sides.

## Revendications

1. Fermeture à crochets pour filtre à air, notamment pour l'alimentation de moteurs à combustion interne, fermeture destinée à relier le couvercle (3) de ce boîtier à la partie inférieure (1) de celui-ci, et composée d'un crochet élastique (4) en lamelle et d'un contre-appui (5) formé sur cette partie inférieure, fermeture caractérisée en ce que le contre-appui (5) est composé d'une demi-cuvette (10) et de deux cliquets (11, 12) qui sont disposés latéralement à cette cuvette (10) et plus bas qu'elle; en ce que ces cliquets (11, 12) sont disposés à une distance mutuelle qui, à leur extrémité opposée à la demi-cuvette (10), correspond au moins à la largeur du crochet élastique (4); en ce que les extrémités, tournées vers la demi-cuvette (10), des cliquets ont une conformation élastique ; en ce que l'extrémité (6) dudit crochet (4), qui est adjacente à la partie inférieure (1) du boîtier est recourbée circulairement et forme une portée qui est appliquée contre la demi-cuvette (10); et ce que les extrémités élastiques des cliquets (11, 12) sont engagées dans l'ouverture formée par cette extrémité (6) recourbée circulairement du crochet.

2. Fermeture à crochets selon la revendication 1, caractérisée en ce que, dans le cas d'une partie inférieure (1) de boîtier en matière plastique, la demi-cuvette (10) et les deux cliquets (11, 12) font corps avec cette partie inférieure en étant formés par moulage par injection sur cette partie inférieure.

3. Fermeture à crochets selon la revendication 1 ou 2, caractérisée en ce que la distance (16) qui sépare la demi-cuvette (10) des deux cliquets (11, 12) correspond sensiblement à l'épaisseur de la paroi du crochet élastique (4).

4. Fermeture à crochets selon l'une quelconque des revendications précédentes, caractérisée en ce que les extrémités des deux cliquets (11, 12), opposées à la demi-cuvette (10), présentent des chanfreins (13) sur leurs côtés qui se font vis-à-vis.

Fig. 1

Fig. 2

Fig. 3